# EUROPEAN PATENT SPECIFICATION

(11) **EP 0 346 518 B1**
(45) Date of publication and mention of the grant of the patent: **03.02.1993**
(21) Application number: 88109693.7
(22) Date of filing: 16.06.1988
(51) Int. Cl.: B29C 49/48, B29C 49/12

(54) **Process for producing stretch blow-molded bottle with a handle**
Verfahren zum Herstellen einer streckblasgeformten Flasche mit einem Griff
Procédé de fabrication d'une bouteille munie d'une anse par étirage-soufflage

(43) Date of publication of application: 20.12.1989
(73) Proprietor: TOAGOSEI CHEMICAL INDUSTRY CO., LTD., Tokyo (JP); TAHARA LTD., Tokyo (JP)
(72) Inventor: Matsuoka, Daizo c/o Toagosei Chemical, Minato-ku Nagoya-shi Aichi (JP); Ando, Nobuhiko Toagosei Chemical Industry Co. Ltd., Minato-ku Nagoya-shi Aichi (JP); Uchiyama, Mikio c/o Tahara-Shoyei Co., Ltd., Edogawa-ku Tokyo (JP)
(74) Representative: Wilhelms, Rolf E., Dr.

(56) References cited:
- DE-A- 2 542 621
- US-A- 3 424 829
- US-A- 4 123 217
- US-E- 29 045
- PATENT ABSTRACTS OF JAPAN, vol. 10, no. 200 (M-498)[2256], 12th July 1986; & JP-A-61 43 535 (TOYO SEIKAN KAISHA LTD) 03-03-1986
- PATENT ABSTRACTS OF JAPAN, vol. 6, no. 138 (M-145)[1016], 27th July 1982; & JP-A-57 59 725 (TOUYOU SEIKAN K.K.) 10-04-1982

## Description

The present invention relates to a process for producing a stretch blow-molded bottle with a handle from a polyvinyl chloride resin.

Modern plastic bottles with large inner capacities are usually furnished with a handle that render them easy to carry.

A common process for producing a plastic bottle with a handle by blow molding requires the following basic steps: extruding a hollow parison from an extruder; fitting the parison with a bottom; blowing air into the bottomed parison so that it expands to a preblown article; holding the preblown article between a pair of split mold halves having handle forming projections; and blowing air so that the article is expanded to conform to the shape or the molds. In this process, the area of the preblown article where a handle-defining hole is to be made is closed with the projections on the molds so as to form a bottle where the peripheral edges of said hole are used, and the fused edges (i.e., burrs) are then removed by boring. A method for making pinched-shut, non-blown portions of a blown plastic jug with a blow mold projection is disclosed in U.S. Patent 3,983,199.

This conventional process for making a handle on a bottle by holding a preblown article between projections on molds has the following major disadvantage: the handle is usually situated in the neighborhood of the shoulder of the bottle, so the area around the top opening of the preblown article inevitably becomes large but since the neck required for the blow-molded bottle is small, burrs are unavoidably formed around the neck of the bottle. The formation of burrs is extensive in large bottles. See, e.g., Szajna, "The Plastic Bottle- Marketing, Engineering and Economics: A Supplement to 1980 ANTEC Paper 'Functions vs. Economics vs. Aesthetics'," Society of Plastics Engineers Annual Technical Conference 40 (1982), page 707. Another problem is that the formation of burrs on the bottom is too extensive to neglect in the conventional process.

While direct blow molding has been the most common of the conventional blow molding techniques, it has recently become possible to produce blow-molded articles that are better than the direct blow-molded products in such aspects as mechanical strength, clarity and gas barrier properties. Such superior products can be obtained by a new technique called stretch blow molding, which is already in commercial use. In the stretch blow-molding technique, air is injected into a parison emerging from an extruder (preblowing step), and the resulting preform (or an injection-molded preform) is transferred to a blow mold, where it is stretched bidirectionally at an optimum stretching temperature not lower than the glass transition point of the resin but less than its molding temperature, with a stretch pin being inserted to effect axial stretching and air being blown to cause transverse stretching. This bidirectional stretching causes molecular orientation of the polymer chains in the thermoplastic resin of which the preform is made, thereby yielding blow molded articles having the improved properties described above. See, Szajna, "The Plastic Bottle - Marketing, Engineering and Economics," supra, at pages 705-706; U.S. Patent Re. 29,045.

There has been a need in the packaging industry to apply the stretch blow molding technique to the manufacture of plastic bottles with handles. However, in the stretch blow molding method, the preform is heated in the mold at a temperature not lower than the glass transition point of the thermoplastic resin being molded and which is less than the molding temperature of the resin. If a polyvinyl chloride bottle is to be made, the preform is typically heated at a temperature from about 90° to 140°C, preferably from about 100° to 120°C. In this regard, the glass transition point of polyvinyl chloride is from about 70° to 80°C and the molding temperature is from about 160° to 220°C. Therefore, even if the method of using a pair of split mold halves having projections for forming a handle-defining hole is applied to the air and pin stretched preblown article with a view to forming both the handle and the bottle body from a single preform, the neck portion cannot be fused and the area left after deburring cannot be sealed to provide a commercially acceptable bottle.

When the handle portion of the thermoplastic resin is heated at a temperature higher than the molding temperature of the resin using a mold equipped with a heater so as to avoid the above problem, the effect due to stretching is lost at the heated portion of the resin so that the mechanical strength markedly decreases. Particularly, described in JP-A-61 43535 or JP-A-57 59725 use of crystalline resins such as polyethylene terephthalate suffers, in addition, other problems, e.g., the resin becomes white as crystallization proceeds by heat, and the molded resin is easily broken due to distortion generated by the difference in crystallinity between the handle portion and other portions.

As described above, the method commonly employed in the conventional blow molding technique (i.e., direct blow molding) cannot be satisfactorily applied to the stretch blow molding technique, and therefore, various other methods have been proposed for producing blow-molded bottles with a handle by the stretch blow molding technique. A method which is typical of these proposals is described in Japanese Patent Publication No. 11218/88 and consists of furnishing a stretch blow-molded bottle body with a separately fabricated handle by a suitable method such as tight fitting.

However, the bottle fabricated by this process is not a unitary assembly prepared from a single preform consisting of the bottle body and a handler so it lacks secure attachment of the handle to the bottle body. In addition, the fabrication process involves complicated steps.

An object, therefore, of the present invention is to provide an improved process for producing a bottle with a handle by the stretch blow molding technique.

As a result of studies conducted in order to attain this and other objects of the present invention, the present inventors have now found that a stretch blow-molded bottle with a handle can be readily produced from a polyvinyl chloride if, in the process of stretch blow-molding a preform at a temperature not lower than its glass transition point but below its molding temperature, a blow mold furnished with a pair of opposed movable projecting parts, is used and if the projections are pushed into the preform after it has expanded to the stage where the formation of a handle portion becomes possible (i.e., the preform has expanded to at least about 80% of the inner capacity of the blow mold) and before the preform cools to a temperature below the glass transition point, preferably before the preform expands completely (until its volume becomes equal to the inner capacity of the blow mold) and cools upon contact with the inside walls of the blow mold, thereby pressing and holding the area where a handle-defining hole is to be formed until cavities in a shape corresponding to the handle-defining hole form.

Then the peripheral edges of the thus-formed cavities be fused by high-frequency dielectric heating followed by boring the resin in the cavities to form a handle-defining portion.

Accordingly, in one aspect the present invention relates to a process for producing a stretch blow-molded bottle with a handle, by the steps of (a) stretching an injection-molded or blow-molded polyvinyl chloride resin preform within a blow mold by axial stretching with a stretch pin and transverse stretching with blown air at a temperature at least equal to the glass transition point of the resin but below its molding temperature, (b) pressing and holding an area of the stretched preform between a pair of opposed movable projecting members provided within the blow mold, after the preform is expanded to substantially fill the volume blow mold and before the preform is cooled to a temperature below the glass transition point of the resin; (c) cooling the expanded preform by contact with the inner walls of the blow mold to form a stretch blow-molded bottle having opposing depressions defining a handle; and (d) fusing the peripheral edges of the opposing depressions and removing the resin inside the peripheral edges to form a handle hole surrounded by the stretch blow-molded bottle.
Fig. 1 is a longitudinal section of a mold with a pair of movable projecting parts 2 in which a preform 1 is placed in position;
Fig. 2 is a cross section taken on line A-A' of Fig. 1 and which shows the state where the projecting parts 2 are pushed into the preform 1 that has been expanded by stretching with air blown through a blow pin 5 and by axial movement of a stretch pin 4;
Fig. 3A is a front view of a stretch blow-molded bottle 7 with cavities 6;
Fig. 3B is a longitudinal section of the same bottle; and
Fig. 4 shows schematically how the peripheral edges of the cavities 6 in the bottle 7 are fused under pressure with a high-frequency dielectric heater.

The present invention is hereinafter described in detail with reference to the accompanying drawings.

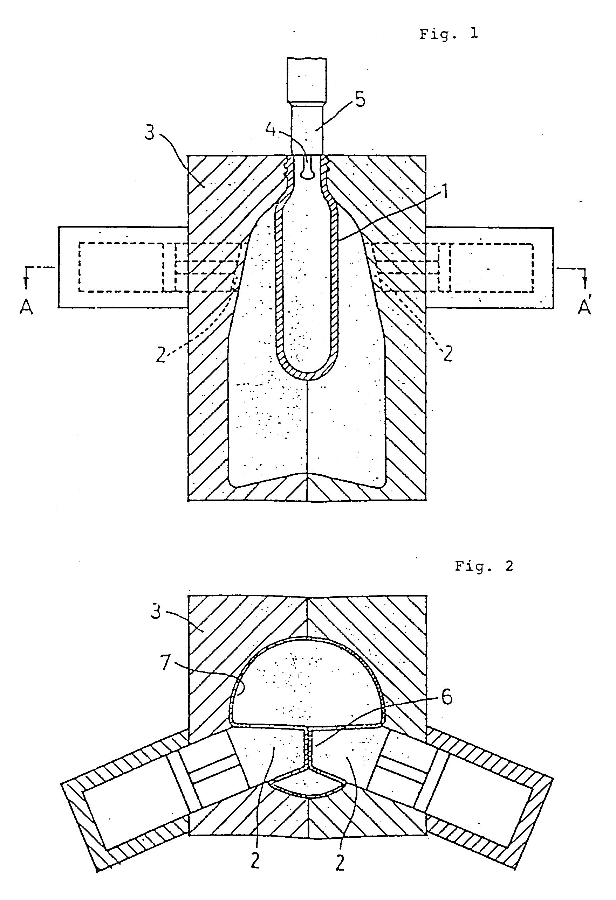

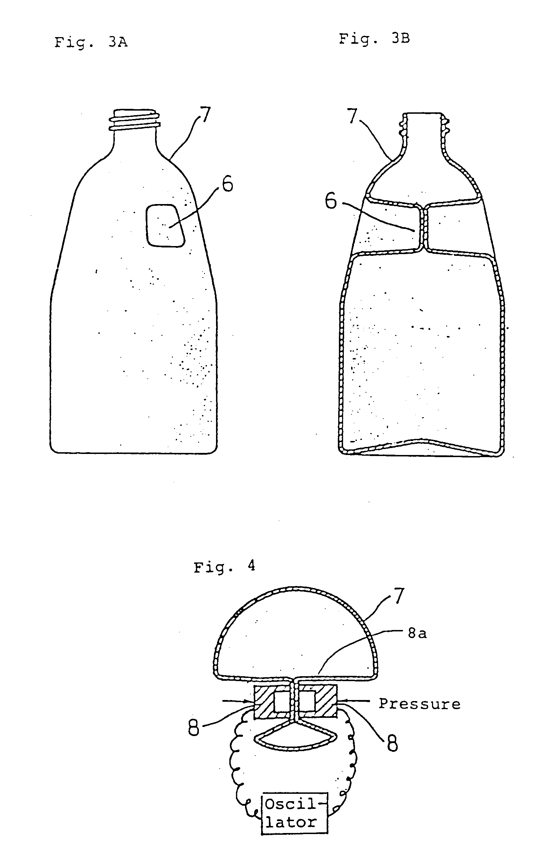

As shown in Fig. 1, a preform 1 of a Polyvinyl chloride resin kept at an optimum stretching temperature is placed in position in a mold 3 having a pair of projecting parts 2 that are moved by suitable means such as hydraulic or pnematic pressure, the mold being preferably cooled with a refrigerant such as water. Then, a stretch pin 4 is pushed downward to press the bottom of the preform 1. Simultaneously or immediately thereafter, air is injected through a blow pin 5 to expand the preform 1 toward the inside walls of the mold 3. After the preform 1 has expanded to the stage where the formation of a handle portion becomes possible (i.e., the preform has expanded to at least about 80% of the inner capacity of the mold 3) and before the preform cools at a temperature below the glass transition point of the resin, preferably before the preform expands completely (until its volume becomes equal to the inner capacity of the mold 3) and cools upon contact with the inside walls of the mold 3, the projecting parts 2 are pushed into the preform as shown in Fig. 2 which is a cross section taken on line A-A' of Fig. 1. As a result, a bottle 7 having the shape shown in Fig. 3 is formed in the mold 3 (this bottle is hereinafter referred to as an intermediate bottle).

If, in the process described above, the projecting parts 2 are pushed into the preform 1 before it has expanded to the stage where the formation of a handle portion becomes possible (i.e., the volume of the preform is less than about 80% of the inner capacity of the mold 3), cavities 6 corresponding to a handle-defining hole will not be formed in a desired shape. When the preform 1 has expanded completely (until its volume becomes equal to the inner capacity of the mold 3) and cools to a temperature below the glass transition point upon contact with the inside walls of the mold 3, the subsequent pressing and holding cannot be performed. If the projecting parts 2 are pushed into the preform 1 at this stage, the preform 1 may break or the thickness of the walls between the cavities 6 may become uneven.

The projecting parts 2 are preferably pushed into the preform 1 at a time that is as close as possible to the time when the latter has expanded completely (until its volume becomes equal to the inner capacity of the mold 3) and cools upon contact with the inside walls of the mold 3. If this condition is satisfied, better characteristics are provided for the blow-molded bottle obtained.

The portion corresponding to the cavities 6 is preferably curved concavely toward the center of the blow-molded bottle in view of the strength against deformation and for gripping the bottle formed. For this purpose, the projecting parts 2 preferably have smoothly and convexly curved surfaces.

The so produced intermediate bottle 7 can be directly used as a final bottle with a handle. If a large bottle having an inner capacity of at least 1,000 ml is to be produced, the cavities 6 are preferably bored through. As will be stated below, the peripheral edges of the cavities 6 can be readily fused by high-frequency dielectric heating, so by boring the inside of the cavities after thermally fusing their peripheral edges, a bottle with a handle that is easier to carry can be produced.

The depressions or cavities 6 in the intermediate bottle 7 are defined by a pair of opposed plastic walls spaced apart by a small gap. Since the pair of opposed plastic wall are formed by pressing the pair of projecting parts 2 in the accordance with the present invention, the gap between the two plastic walls can be made as small as 0.1 mm and below or even substantially zero if desired, so the peripheral edges of the cavities 6 can be readily fused by high-frequency dielectric heating.

The method for thermally fusing the peripheral edges of the cavities 6 in the intermediate bottle 7 by high-frequency dielectric heating is described in greater detail below.

The electrodes, or heating terminals, on the high-frequency dielectric bonding apparatus for thermal fusion of the peripheral edges of the cavities 6 are preferably made of brass. The periphery of the working faces of the heating terminals is preferably slightly smaller than the periphery of each cavity 6. As shown in Fig. 4, the heating terminals 8 preferably have protruding working faces 8a of about 0.2 to about 2 mm in width provided at their periphery so that the cavities 6 are thermally fused throughout the periphery thereof. The width of the protruding working faces 8a is particularly preferably from about 0.2 to about 0.4 mm, whereby the cavities 6 after thermal fusion can be removed more easily and with less burr and moreover the cavities 6 can be removed simultaneously upon thermal fusion. The heating terminals preferably have a built-in heater that maintains a temperature of about 45 to 80°C during use.

A pair of the heating terminals 8 described above are held against the peripheral edges of the cavities 6 in the intermediate bottle 7 as shown in Fig. 4 and an electric current is applied to the heating terminals so that the entire portion of the peripheral edges is thermally fused over a width ranging from about 0.2 to 2 mm. The high-frequency dielectric bonding apparatus typically generates a frequency of the order to 40.46 MHz. The preferred heating time varies with the wall thickness of the bottle to be produced but satisfactory results are usually attained by heating for a period of 1 to 4 seconds.

The peripheral edges of the cavities 6 in the bottle 7 are thermally fused by high-frequency dielectric bonding in the manner described above after the bottle 7 is removed from the blow mold. Alternatively, thermal fusion may be conducted within the mold 3 if it is furnished with movable plugs incorporating in its tips the heating terminals of the high-frequency dielectric bonding apparatus.

After thermally fusing the peripheral edges of the area of the intermediate bottle 7 where the handle-defining hole is to be formed, the inside of the cavities 7 are bored through by the following method.

After thermal fusion of the peripheral edges of the cavities 6 is performed by high-frequency dielectric bonding, the inside of the cavities 6 can be readily bored through the pushing one of the two heating terminals into the fixed bottle 7 while pulling the other heating terminal away from the bottle.

As for a polyvinyl chloride, From the view-points of moldability and mechanical strength of the bottle produced, polyvinyl chloride having a degree of polymerization in the range of about 600 to 1100 is preferred.

One embodiment of the process of the present invention is illustrated in greater detail with reference to the following example, which is not to be construed as limiting the scope of the present invention.

### EXAMPLE

A stretch blow-molded bottle with a handle was produced with a biaxial stretching blow-molding machine (BM04, manufactured by Bekumu Co.) using a commercially available PVC compound for blow-molding, mainly composed of PVC (degree of polymerization 700) stabilized with octyl-tin-mercato octyl (Aron Compound BL 2H-8VIP, produced by Toa Gosei Chemical Industry Co., Ltd.).

The PVC compound was molded into a cylindrical parison by an extruder wherein the temperature of the cylinder, adapter and die portions were controlled to 170 to 180°C. The parison was then put into a preform mold of beryllium-copper alloy kept at 10 to 70°C with a heat-control jacket capable of controlling temperatures in seven divided portions independently and the parison was cut at the top of the mold through which a blow pin was inserted, followed by blowing compressed air thereto to obtain a preform which was then properly cooled to 100 to 120°C with the thermally controlled mold, to produce a molded preform having a diameter of 45 mm, a height of 250 mm and a round bottom.

The thus obtained preform which was thermally controlled at 100 to 120°C was placed in a finish mold (for a bottle of 1,800 ml) provided with a pair of movable projecting parts for forming a handle and was stretched downward to the bottom of the mold with a stretch pin while blowing air from the upper portion of the preform. When the volume of the preform was almost the same as that of the mold, the preform was pressed with the pair of projecting parts to form the handle, and then the air-blowing was completed to fill the mold with the molded product.

After removing the molded product from the mold, it was then subjected to thermal fusion at the peripheral edge of the pressed portions with a pair of heating terminals having protruding working faces of high-frequency welder (3kw) in conformity with the periphery of the pressed portions to fuse the opposing pressed portions at their edges, and then one of the heating terminals was pushed into the fused pressed portion of the bottle while withdrawing the other terminal, whereby the pressed portion was removed with burr and the thus formed handle was smoothed with the side of the heating terminal inserted.

In accordance with the present invention, a bottle with a handle can be easily stretch blow-molded from a single preform as a unitary assembly of the handle and the bottle body. The molded bottle has good aesthetic appeal because of its high clarity. In addition, it has sufficient gas barrier properties to ensure prolonged storage of the contents. As a further advantage, the bottle can be produced from a small charge of resin without sacrificing its mechanical strength.

## Claims

1. A process for producing a stretch blow-molded bottle with a handle, comprising the steps of
(a) stretching an injection-molded or blow-molded polyvinyl chloride resin preform within a blow mold by axial stretching with a stretch pin and transverse stretching with blown air at a temperature at least equal to the glass transition point of said resin but below its molding temperature of said resin;
(b) pressing and holding an area of the stretched preform between a pair of opposed movable projecting members provided within said blow mold, after the preform is expanded to substantially fill the inner cavity of the blow mold and before the preform is cooled to a temperature below the glass transition point of the resin;
(c) cooling said expanded preform by contact with the inner walls of the blow mold to form a stretch blow-molded bottle having opposing depressions defining a handle; and
(d) fusing the peripheral edges of said opposing depressions defining said handle by high-frequency dielectric heating and removing the resin inside the peripheral edges to form a handle hole surrounded by the stretch blow-molded bottle.

2. The method as claimed in claim 1, wherein said pressing and holding in step (b) is performed after the preform is expanded to fill at least about 80% of the volume of the blow mold.

3. The method as claimed in claim 2, wherein said pressing and holding is performed before the preform is expanded to completely fill the blow mold, and the preform is then expanded to fill the blow mold prior to said cooling in step (c).

4. The method as claimed in claim 1, wherein said axial stretching and said transverse stretching in step (a) are performed simultaneously.

5. The method as claimed in claim 1, wherein said axial stretching is performed prior to said transverse stretching.

6. The method as claimed in claim 1, wherein said blown mold is cooled with a refrigerant.

7. The method as claimed in claim 6, wherein said refrigerant is water.

8. The method as claimed in claim 1, wherein said stretching in step (a) is performed at a temperature of from 90 to 140°C.

9. The method as claimed in claim 8, wherein said stretching in step (a) is performed at a temperature of from 100 to 120°C.

10. The method as claimed in claim 1, wherein said fusing step (d) is performed using two heating terminals inserted into said opposing depressions, each said terminal having a raised peripheral area from about 0.2 to 2 mm in width adopted for fusing said peripheral edges to a width of from about 0.2 to 2 mm.

11. The method as claimed in claim 10, wherein said removing the resin inside the peripheral edges in step (d) is performed by inserting one heating terminal through the handle hole while withdrawing the opposing heating terminal, while the peripheral edges are in a molten state.

## Patentansprüche

1. Verfahren zur Herstellung einer streck-blasgeformten Flasche mit einem Griff, die folgenden Stufen aufweisend:
(a) Strecken einer einspritzgeformten oder blasgeformten Polyvinylchloridharzvorform in einer Blasform durch axiale Streckung mit einem Streckdorn und transversale Streckung mit geblasener Luft bei einer Temperatur von mindestens gleich der Glasübergangstemperatur des Harzes, jedoch unterhalb der Formtemperatur des Harzes;
(b) Pressen und Halten eines Bereiches der gestreckten Vorform zwischen einem Paar gegenüberliegender, beweglichen Formglieder innerhalb der Blasform, nachdem die Vorform im wesentlichen auf die Größe des Inneren der Blasform expandiert ist, und bevor die Vorform auf eine Temperatur unterhalb der Glasübergangstemperatur des Harzes abgekühlt ist;
(c) Abkühlung der expandierten Vorform durch Kontakt mit den Innenwänden der Blasform unter Bildung einer streckblasgeformten Flasche mit gegenüberliegenden Einbuchtungen, die einen Griff definieren; und
(d) Verschmelzen der peripheren Kanten der gegenüberliegenden Einbuchtungen, die den Handgriff definieren, durch hochfrequentes dielektrisches Heizen und Entfernung des Harzes innerhalb der peripheren Kanten unter Bildung eines Griffloches, das von der streck-blasgeformten Flasche umgeben ist.

2. Verfahren nach Anspruch 1, wobei das Pressen und Halten in Stufe (b) nach Expandieren der Vorform auf mindestens etwa 80 % des Volumens der Blasform durchgeführt wird.

3. Verfahren nach Anspruch 2, wobei das Pressen und Halten stattfindet, bevor die Vorform vollständig die Blasform ausfüllt, und wobei die Vorform dann expandiert wird, um die Blasform vor dem Kühlschritt (c) auszufüllen.

4. Verfahren nach Anspruch 1, wobei das axiale Strecken und das transversale Strecken in Stufe (a) gleichzeitig durchgeführt werden.

5. Verfahren nach Anspruch 1, wobei das axiale Strecken vor dem transversalen Strecken durchgeführt wird.

6. Verfahren nach Anspruch 1, wobei die Blasform mit einem Kühlmittel gekühlt wird.

7. Verfahren nach Anspruch 6, wobei das Kühlmittel Wasser ist.

8. Verfahren nach Anspruch 1, wobei das Strecken in Sufe (a) bei einer Temperatur von 90 - 140° C durchgeführt wird.

9. Verfahren nach Anspruch 8, wobei das Strecken in Stufe (a) bei einer Temperatur von 100 - 120° C durchgeführt wird.

10. Verfahren nach Anspruch 1, wobei das Verschmelzen in Stufe (d) durchgeführt wird, indem zwei Heizterminals verwendet werden, die in die sich gegenüberliegenden Einbuchtungen eingeschoben sind, wobei jedes Terminal einen erhöhten peripheren Bereich von etwa 0,2 bis 2mm Breite aufweist, der zum Verschmelzen der peripheren Kanten auf eine Breite von etwa 0,2 bis 2mm ausgelegt ist.

11. Verfahren nach Anspruch 10, wobei das Entfernen des Harzes innerhalb der peripheren Kanten in Stufe (d) durchgeführt wird, indem ein Heizterminal durch das Handgriffloch eingeführt wird, während das gegenüberliegende Heizterminal herausgezogen wird, während die peripheren Kanten in geschmolzenem Zustand sind.

## Revendications

1. Procédé de fabrication d'une bouteille munie d'une anse par moulage par étirage-soufflage, comprenant les étapes de :
(a) étirage d'une préforme en résine de chlorure de polyvinyle moulée par injection ou moulée par soufflage à l'intérieur d'un moule de soufflage, par étirement axial avec une broche d'étirage et par étirement transversal avec de l'air soufflé à une température au moins égale au point de transition vitreuse de ladite résine mais inférieure à la température de moulage de ladite résine ;
(b) pressage et maintien d'une zone de la préforme étirée entre une paire d'éléments en protubérance opposés et mobiles prévus dans ledit morne de soufflage, après que la préforme est dilatée jusqu'à remplir sensiblement la cavité interne du moule de soufflage et avant que la préforme ne soit refroidie jusqu'à une température inférieure au point de transition vitreuse de la résine ;
(c) refroidissement de ladite préforme dilatée du fait du contact avec les parois internes du morne de soufflage afin de former une bouteille moulée par soufflage présentant des dépressions opposées qui définissent une anse ; et
(d) fusion des bords périphériques desdites dépressions opposées qui définissent ladite anse au moyen d'un chauffage diélectrique haute fréquence et enlèvement de la résine à l'intérieur des bords périphériques pour former un trou d'anse entouré par la bouteille moulée par étirage-soufflage.

2. Procédé selon la revendication 1, dans lequel ledit pressage et ledit maintien de l'étape (b) sont effectués après que la préforme est dilatée jusqu'à remplir au moins 80% du volume du morne de soufflage.

3. Procédé selon la revendication 2, dans lequel ledit pressage et ledit maintien sont effectués avant que la préforme ne soit dilatée jusqu'à remplir complètement le morne de soufflage et la préforme est ensuite dilatée jusqu'à remplir le moule de soufflage avant ledit refroidissement de l'étape (c).

4. Procédé selon la revendication 1, dans lequel ledit étirement axial et ledit étirement transversal de l'étape (a) sont effectués simultanément.

5. Procédé selon la revendication 1, dans lequel ledit étirement axial est effectué avant ledit étirement transversal.

6. Procédé selon la revendication 1, dans lequel ledit moule de soufflage est refroidi avec un réfrigérant.

7. Procédé selon la revendication 6, dans lequel ledit réfrigérant est de l'eau.

8. Procédé selon la revendication 1, dans lequel ledit étirement de l'étape (a) est effectué à une température qui va de 90 à 140° C.

9. Procédé selon la revendication 8, dans lequel ledit étirement de l'étape (a) est effectué à une température qui va de 100 à 120° C.

10. Procédé selon la revendication 1, dans lequel ladite fusion de l'étape (d) est effectuée en utilisant deux mâchoires de chauffage insérées à l'intérieur desdites dépressions opposées, chaque dite mâchoire comportant une zone périphérique qui est relevée sur une largeur qui va d'environ 0,2 à environ 2 mm et qui est conçue pour fondre lesdits bords périphériques sur une largeur qui va d'environ 0,2 à environ 2 mm.

11. Procédé selon la revendication 10, dans lequel ledit enlèvement de la résine de l'intérieur des bords périphériques de l'étape (d) est effectué en insérant une mâchoire chauffante au travers du trou d'anse tout en retirant la mâchoire chauffante opposée tandis que les bords périphériques sont dans un état fondu.
